# EUROPEAN PATENT APPLICATION

(11) **EP 4 730 112 A1**
(43) Date of publication of application: **22.04.2026**
(21) Application number: 24841927.7
(22) Date of filing: 27.02.2024
(51) Int. Cl.: G06F 8/658, G06F 16/23

(54) **DATA UPDATE METHOD, APPARATUS AND DEVICE, AND COMPUTER-READABLE STORAGE MEDIUM**

(30) Priority: 14.07.2023 CN 202310875613
(71) Applicant: Huawei Technologies Co., Ltd., Shenzhen, Guangdong 518129 (CN)
(72) Inventor: LI, Zhendong, Shenzhen, Guangdong 518129 (CN); DONG, Wei, Hangzhou, Zhejiang 310058 (CN); JIN, Lewei, Hangzhou, Zhejiang 310058 (CN); SUN, Tong, Hangzhou, Zhejiang 310058 (CN); CHANG, Jia, Shenzhen, Guangdong 518129 (CN)
(74) Representative: Goddar, Heinz J.
(86) International application number: PCT/CN2024/078674
(87) International publication number: WO 2025/015921

(57) **Abstract**

This application discloses a data update method and apparatus, a device, and a computer-readable storage medium, and relates to the field of communication technologies. The method includes: obtaining first data obtained by compressing third data in at least a first compression manner and a second compression manner successively, and second data obtained by compressing fourth data in at least the first compression manner and the second compression manner successively, where the fourth data is obtained by updating the third data; decompressing the first data and the second data in a first decompression manner corresponding to the second compression manner to obtain first intermediate data and second intermediate data; determining first differential data between the second intermediate data and the first intermediate data; and updating the first data based on the first differential data and the first intermediate data. In this application, the first differential data is accurately determined based on the first intermediate data and the second intermediate data that are obtained through partial decompression, and the first data can be efficiently updated based on the first differential data and the first intermediate data.

## Description

This application claims priority to Chinese Patent Application No. 202310875613.9, filed on July 14, 2023 and entitled "DATA UPDATE METHOD AND APPARATUS, DEVICE, AND COMPUTER-READABLE STORAGE MEDIUM", which is incorporated herein by reference in its entirety.

### TECHNICAL FIELD

This application relates to the field of communication technologies, and in particular, to a data update method and apparatus, a device, and a computer-readable storage medium.

### BACKGROUND

Operation and maintenance of various functions of various devices in a communication system need to be implemented based on data. In addition, with development of communication technologies and continuous change of user requirements, the data needs to be continuously updated, to implement update of the various functions in the communication system, so that the continuously updated functions meet real-time requirements of users.

### SUMMARY

This application provides a data update method and apparatus, a device, and a computer-readable storage medium, to improve accuracy and efficiency of data update. Technical solutions are as follows.

According to a first aspect, a data update method is provided, where the method is applied to a first device. The method includes: obtaining first data and second data, where the first data includes data obtained by compressing third data in at least a first compression manner and a second compression manner successively, the second data includes data obtained by compressing fourth data in at least the first compression manner and the second compression manner successively, and the fourth data is obtained by updating the third data; separately decompressing the first data and the second data in a first decompression manner corresponding to the second compression manner to obtain a first decompression result and a second decompression result, where the first decompression result includes first intermediate data obtained based on the first data, and the second decompression result includes second intermediate data obtained based on the second data; determining first differential data between the second intermediate data and the first intermediate data; and sending the first differential data, where the first differential data is used to update the first data in a second device.

In this application, the first intermediate data and the second intermediate data are obtained by partially decompressing the first data and the second data, where the first intermediate data is the data obtained by compressing the third data in the first compression manner, and the second intermediate data is the data obtained by compressing the fourth data in the first compression manner. Similarity between the first intermediate data and the second intermediate data can reflect similarity between the third data and the fourth data. Therefore, the first differential data can be accurately and efficiently determined based on the first intermediate data and the second intermediate data, and the first data can be updated based on the first differential data and the first intermediate data, thereby improving efficiency of data update.

In a possible implementation, the first decompression result further includes first reference data corresponding to the first data, the first reference data is data referenced in a process of compressing the first intermediate data in the second compression manner to obtain the first data, the second decompression result further includes second reference data corresponding to the second data, and the second reference data is data referenced in a process of compressing the second intermediate data in the second compression manner to obtain the second data; and after determining the first differential data between the second intermediate data and the first intermediate data, the method further includes: determining, based on the first differential data, the first reference data, and the second reference data, reference data corresponding to the first differential data; and sending the reference data, where the reference data is used to update the first data in the second device. The reference data corresponding to the first differential data is determined based on the first reference data and the second reference data, and the determined reference data is sent, so that the first data can be updated more accurately based on the first differential data and the reference data.

In a possible implementation, the method further includes: obtaining a first data packet including at least one piece of first compressed data and a second data packet including at least one piece of second compressed data, where the first data is first compressed data that is in the first data packet and that is different from the at least one piece of second compressed data, and the second data is second compressed data that is in the second data packet and that is different from the at least one piece of first compressed data. Data that is in the first data packet and that is different from that in the second data packet is determined as the first data and the second data that need to be partially decompressed, and same data does not need to be decompressed, thereby further improving efficiency of determining the first differential data.

In a possible implementation, after sending the first differential data, the method further includes: obtaining fifth data and sixth data, where the fifth data and the first data are of different types, and the sixth data and the second data are of different types; determining second differential data between the fifth data and the sixth data; and sending the second differential data, where the second differential data is used to update the fifth data in the second device. The second differential data is determined based on the fifth data and the sixth data, so that the fifth data in the first data packet can be updated based on the second differential data. Therefore, the data packet is updated more completely.

According to a second aspect, a data update method is provided, where the method is applied to a second device. The method includes: receiving first differential data corresponding to first data; obtaining the first data in the second device, where the first data in the second device includes data obtained by compressing third data in at least a first compression manner and a second compression manner successively; decompressing the first data in the second device in a first decompression manner corresponding to the second compression manner to obtain a first decompression result, where the first decompression result includes first intermediate data obtained based on the first data; and updating the first data in the second device based on the first intermediate data and the first differential data. Because the first data does not need to be fully decompressed, the first data in the second device can be updated based on the first differential data and the first intermediate data, thereby improving efficiency of data update.

In a possible implementation, updating the first data in the second device based on the first intermediate data and the first differential data includes: updating the first intermediate data based on the first differential data to obtain third intermediate data; compressing the third intermediate data in the second compression manner to obtain seventh data; and updating the first data in the second device to the seventh data. In this application, the first data can be updated only by partially re-compressing the third intermediate data obtained through update, thereby improving efficiency of updating the first data.

In a possible implementation, updating the first data in the second device based on the first intermediate data and the first differential data includes: updating the first intermediate data based on the first differential data to obtain third intermediate data; compressing the third intermediate data in the second compression manner based on reference data corresponding to the first differential data to obtain seventh data; and updating the first data in the second device to the seventh data. The third intermediate data is partially re-compressed based on both the first differential data and the reference data, so that accuracy of updating the first data can be further ensured while efficiency of updating the first data is ensured.

In a possible implementation, before compressing the third intermediate data in the second compression manner based on the reference data to obtain the seventh data, the method further includes: receiving the reference data. The third intermediate data is partially re-compressed based on the first differential data and the reference data, to further ensure successful update of the first data.

In a possible implementation, after updating the first data in the second device to the seventh data, the method further includes: updating fifth data in the second device based on second differential data corresponding to the fifth data to obtain eighth data, where the fifth data and the first data are of different types; and updating the fifth data in the second device to the eighth data. The fifth data in the first data packet is updated based on the second differential data, so that the data packet is updated more completely.

In a possible implementation, before updating the fifth data based on the second differential data to obtain the eighth data, the method further includes: receiving the second differential data. The second differential data is received, to ensure that the fifth data is successfully updated based on the second differential data.

According to a third aspect, a data update apparatus is provided, where the apparatus is used in a first device. The apparatus includes: an obtaining module, configured to obtain first data and second data, where the first data includes data obtained by compressing third data in at least a first compression manner and a second compression manner successively, the second data includes data obtained by compressing fourth data in at least the first compression manner and the second compression manner successively, and the fourth data is obtained by updating the third data; a decompression module, configured to separately decompress the first data and the second data in a first decompression manner corresponding to the second compression manner to obtain a first decompression result and a second decompression result, where the first decompression result includes first intermediate data obtained based on the first data, and the second decompression result includes second intermediate data obtained based on the second data; a determining module, configured to determine first differential data between the second intermediate data and the first intermediate data; and a sending module, configured to send the first differential data, where the first differential data is used to update the first data in a second device.

In a possible implementation, the first decompression result further includes first reference data corresponding to the first data, the first reference data is data referenced in a process of compressing the first intermediate data in the second compression manner to obtain the first data, the second decompression result further includes second reference data corresponding to the second data, and the second reference data is data referenced in a process of compressing the second intermediate data in the second compression manner to obtain the second data; the determining module is further configured to determine, based on the first differential data, the first reference data, and the second reference data, reference data corresponding to the first differential data; and the sending module is further configured to send the reference data, where the reference data is used to update the first data in the second device.

In a possible implementation, the obtaining module is further configured to obtain a first data packet including at least one piece of first compressed data and a second data packet including at least one piece of second compressed data, where the first data is first compressed data that is in the first data packet and that is different from the at least one piece of second compressed data, and the second data is second compressed data that is in the second data packet and that is different from the at least one piece of first compressed data.

In a possible implementation, the obtaining module is further configured to obtain fifth data and sixth data, where the fifth data and the first data are of different types, and the sixth data and the second data are of different types; the determining module is further configured to determine second differential data between the fifth data and the sixth data; and the sending module is further configured to send the second differential data, where the second differential data is used to update the fifth data in the second device.

According to a fourth aspect, a data update apparatus is provided, where the apparatus is used in a second device. The apparatus includes: a receiving module, configured to receive first differential data corresponding to first data; an obtaining module, configured to obtain the first data in the second device, where the first data in the second device includes data obtained by compressing third data in at least a first compression manner and a second compression manner successively; a decompression module, configured to decompress the first data in the second device in a first decompression manner corresponding to the second compression manner to obtain a first decompression result, where the first decompression result includes first intermediate data obtained based on the first data; and an updating module, configured to update the first data in the second device based on the first intermediate data and the first differential data.

In a possible implementation, the updating module is configured to: update the first intermediate data based on the first differential data to obtain third intermediate data; compress the third intermediate data in the second compression manner to obtain seventh data; and update the first data in the second device to the seventh data.

In a possible implementation, the updating module is configured to: update the first intermediate data based on the first differential data to obtain third intermediate data; compress the third intermediate data in the second compression manner based on reference data corresponding to the first differential data to obtain seventh data; and update the first data in the second device to the seventh data.

In a possible implementation, the receiving module is further configured to receive the reference data.

In a possible implementation, the updating module is further configured to: update fifth data in the second device based on second differential data corresponding to the fifth data to obtain eighth data, where the fifth data and the first data are of different types; and update the fifth data in the second device to the eighth data.

In a possible implementation, the receiving module is further configured to receive the second differential data.

According to a fifth aspect, another communication apparatus is provided. The apparatus includes a network interface, a memory, and a processor. The communication interface, the memory, and the processor communicate with each other through an internal connection path. The memory is configured to store instructions. The processor is configured to execute the instructions stored in the memory, to control the communication interface to receive a signal and control the communication interface to send a signal. In addition, when the processor executes the instructions stored in the memory, the processor is enabled to perform the method in any one of the first aspect and the possible implementations of the first aspect or any one of the second aspect and the possible implementations of the second aspect.

Optionally, there are one or more processors, and there are one or more memories.

Optionally, the memory and the processor may be integrated together, or the memory and the processor may be separately disposed.

According to a sixth aspect, a communication system is provided. The system includes the apparatus in any one of the third aspect and the possible implementations of the third aspect and the apparatus in any one of the fourth aspect and the possible implementations of the fourth aspect.

According to a seventh aspect, a computer program (product) is provided. The computer program (product) includes computer program code, and when the computer program code is run by a computer, the computer is enabled to perform the method in any one of the first aspect and the possible implementations of the first aspect or any one of the second aspect and the possible implementations of the second aspect.

According to an eighth aspect, a computer-readable storage medium is provided. The computer-readable storage medium stores a program or instructions, and when the program or the instructions are run on a computer, the method in any one of the first aspect and the possible implementations of the first aspect or the method in any one of the second aspect and the possible implementations of the second aspect is performed.

According to a ninth aspect, a chip is provided, including a processor, configured to invoke, from a memory, and run instructions stored in the memory, so that a computer in which the chip is installed performs the method in any one of the first aspect and the possible implementations of the first aspect or any one of the second aspect and the possible implementations of the second aspect.

According to a tenth aspect, another chip is provided, including an input interface, an output interface, a processor, and a memory. The input interface, the output interface, the processor, and the memory are connected through an internal connection path. The processor is configured to execute code in the memory. When the code is executed, a computer in which the chip is installed performs the method in any one of the first aspect and the possible implementations of the first aspect or any one of the second aspect and the possible implementations of the second aspect.

It should be understood that, for beneficial effect achieved by the technical solutions of the third aspect to the tenth aspect of this application and the corresponding possible implementations thereof, refer to the technical effect of the first aspect and the second aspect and the corresponding possible implementations thereof. Details are not described herein again.

### BRIEF DESCRIPTION OF DRAWINGS

FIG. 1 is a diagram of performing differential update in a related technology 1 according to an embodiment of this application;
FIG. 2A and FIG. 2B are a diagram of performing differential update in a related technology 2 according to an embodiment of this application;
FIG. 3 is a diagram of an implementation scenario according to an embodiment of this application;
FIG. 4 is a schematic flowchart of a data update method according to an embodiment of this application;
FIG. 5A and FIG. 5B are a schematic flowchart of data update according to an embodiment of this application;
FIG. 6 is a diagram of file composition of a data packet according to an embodiment of this application;
FIG. 7 is a diagram of a structure of a data update apparatus according to an embodiment of this application;
FIG. 8 is a diagram of a structure of another data update apparatus according to an embodiment of this application; and
FIG. 9 is a diagram of a structure of a data update device according to an embodiment of this application.

### DESCRIPTION OF EMBODIMENTS

Terms used in implementations of this application are only used to explain specific embodiments of this application, but are not intended to limit this application.

Operation and maintenance of various functions of various devices in a communication system need to be implemented based on data. In addition, with development of communication technologies and continuous change of user requirements, the data needs to be continuously updated, to implement update of the various functions, so that the continuously updated functions meet real-time requirements of users. For example, various applications deployed on a terminal in the communication system need to run depending on data that is related to the applications and that is stored in the terminal. Alternatively, various functions of internet of things devices also run depending on related data.

For example, the application deployed on the terminal needs to be updated. The terminal may receive updated data sent by a server, and the application on the terminal runs based on the updated data, to update the application. Data on which running of the application depends may be included in a data packet, and the data packet may be an application package (application package, APK). However, as types, a quantity, and volumes of applications continuously increase, a large amount of data is required for updating the applications, and large bandwidth consumption is required. Consequently, costs of an application market that provides an application update service are increasingly high. In this case, a differential update technology emerges.

The following describes a differential update process. A server of the application market determines a new-version data packet and an earlier-version data packet on the terminal, compares data in the data packets of the two versions, and determines, based on different data in the data packets of the two versions, differential data used by the terminal to update the data packet, where the differential data includes data of an updated part of the new-version data packet relative to the earlier-version data packet. The server sends the differential data to the terminal, and the terminal updates, based on the differential data, the data in the earlier-version data packet stored in the terminal, to obtain a new-version data packet through synthesis, so that the application deployed on the terminal runs based on new-version data, to update the application. Data included in the differential data is data of an updated part of the new-version data relative to earlier-version data, and a volume of the differential data is less than a volume of all the new-version data. Therefore, the differential update technology reduces bandwidth consumption required for updating the application, and reduces costs of the application market for application update.

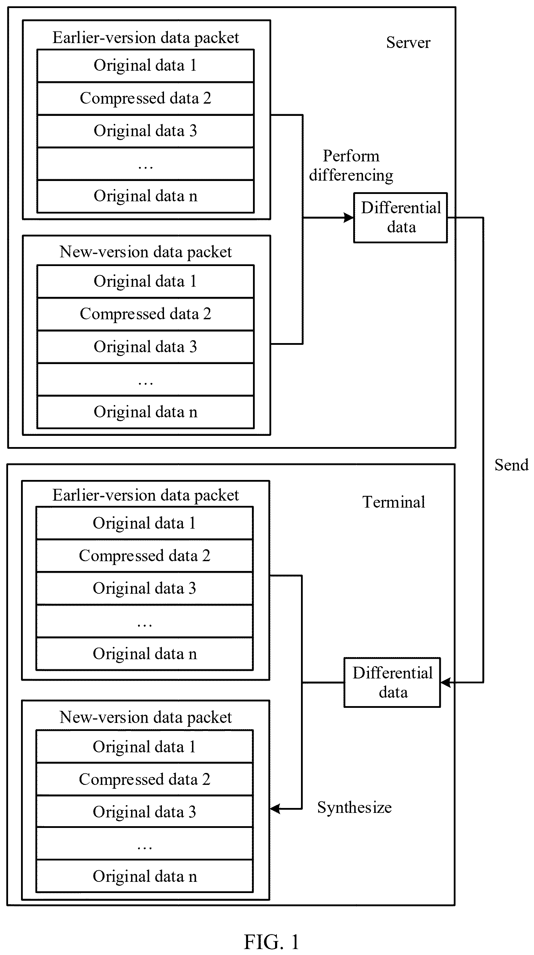

For example, FIG. 1 is a diagram of performing differential update in a related technology 1. The related technology 1 may be, for example, bsdiff (a binary incremental coding algorithm). Earlier-version data packets stored in a server and a terminal each include data 1 to data n, and a new-version data packet stored in the server also includes data 1 to data n. The data packet may store data in different manners. For example, the data 1 in the earlier-version data packet is directly stored, and original data 1 of the data 1 is stored. The data 2 in the earlier-version data packet is compressed and then stored, that is, original data 2 corresponding to the data 2 is compressed to obtain compressed data 2, and the compressed data 2 is stored.

The new-version data packet stored in the server is obtained by updating the earlier-version data packet based on an update requirement. Therefore, the data 1 to the data n in the earlier-version data packet may one-to-one correspond to the data 1 to the data n in the new-version data packet. For the corresponding data in the earlier-version data packet and the new-version data packet, not only the data itself is the same or similar, but also data storage manners are the same. For example, the original data 1 of the data 1 in the earlier-version data packet is directly stored, and correspondingly, original data 1 of the data 1 in the new-version data packet is also directly stored.

In the related technology 1, when differential data is determined based on earlier-version data and new-version data, differential data between two pieces of corresponding data is determined by comparing the corresponding data in the earlier-version data packet and the new-version data packet, without considering a type of the data. In other words, regardless of whether the data in the data packet is original data or compressed data, differential calculation is directly performed in the related technology 1, to determine the differential data between the two pieces of corresponding data. For example, refer to FIG. 1. In the related technology 1, when differential data between the compressed data 2 in the earlier-version data packet and compressed data 2 in the new-version data packet is determined, the two pieces of compressed data 2 are not decompressed, but the two pieces of compressed data 2 are directly compared, and the differential data between the two pieces of compressed data 2 is determined based on a difference between the two pieces of compressed data 2.

However, similarity between data may be damaged through compression, that is, after two pieces of data with high similarity are separately compressed, similarity between the two pieces of compressed data may be reduced, or even two pieces of completely dissimilar data are obtained. Therefore, if decompression is not performed on the compressed data, differential data determined based on the two pieces of compressed data is inaccurate, and a size of the differential data may be changed.

For example, the original data 2 of a new version is 1234123123, the original data 2 of an earlier version is 123123123, and the original data 2 of the new version is only one more character 4 than the original data 2 of the earlier version. If differential calculation is directly performed on the two pieces of original data 2, determined differential data between the two pieces of original data 2 may include only the character 4. For example, the data is divided into a plurality of data segments, and each data segment is correspondingly compressed, and three characters are one data segment. Because three data segments of the original data 2 of the earlier version are the same, the three data segments 123 may be compressed into A. In this case, the compressed data 2 of the earlier version is AAA. When the original data 2 of the new version is compressed, 1^{st} data segment 123 is compressed into A, a 2^{nd} data segment 412 is compressed into B, a 3^{rd} data segment 312 is compressed into C, and a 4^{th} data segment 3 is compressed into D. In this case, the compressed data 2 of the new version is ABCD. Same data between the compressed data 2 of the new version and the compressed data 2 of the earlier version includes only one character A, and all remaining characters are determined as the differential data. It can be learned that similarity between the two pieces of compressed data is damaged, performance of a differential algorithm is affected, and a size of the differential data is increased, resulting in redundancy of the differential data.

In addition, when the terminal synthesizes the differential data sent by the server and the earlier-version data packet stored in the terminal into the new-version data packet, because the volume of the differential data is large, a time required for obtaining the new-version data packet through synthesis is long, and synthesis efficiency is low.

To resolve the problem existing in the related technology 1, a related technology 2 emerges. The related technology 2 may be, for example, an archive-patcher (archive-patcher) technology. The archive-patcher technology may also be referred to as an archive file patching technology, and is a differential algorithm technology based on a Zip (a compression algorithm) file format. In the archive-patcher technology, compressed data is decompressed based on a zlib library (a resource library used for compression and decompression), and then a bsdiff algorithm is used on original data obtained through decompression, to obtain differential data.

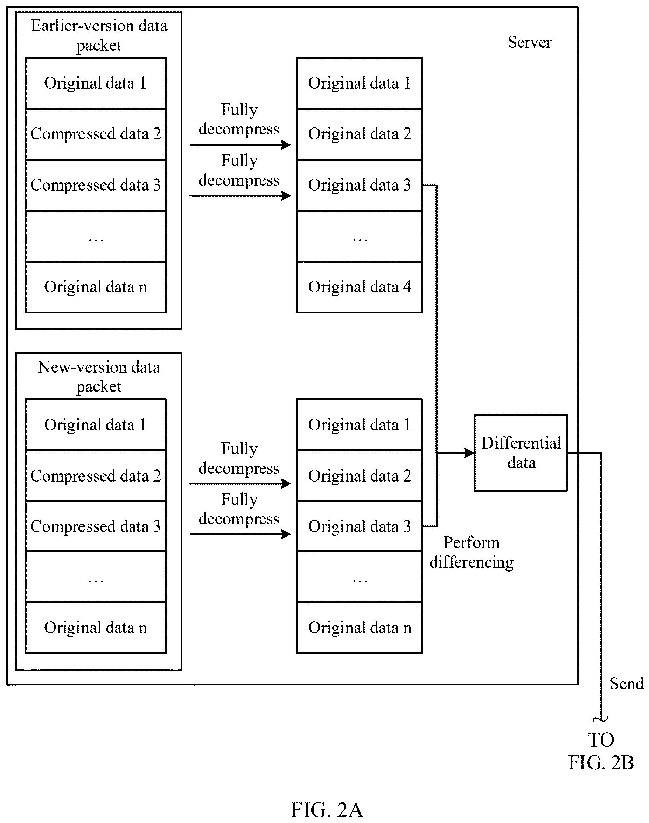

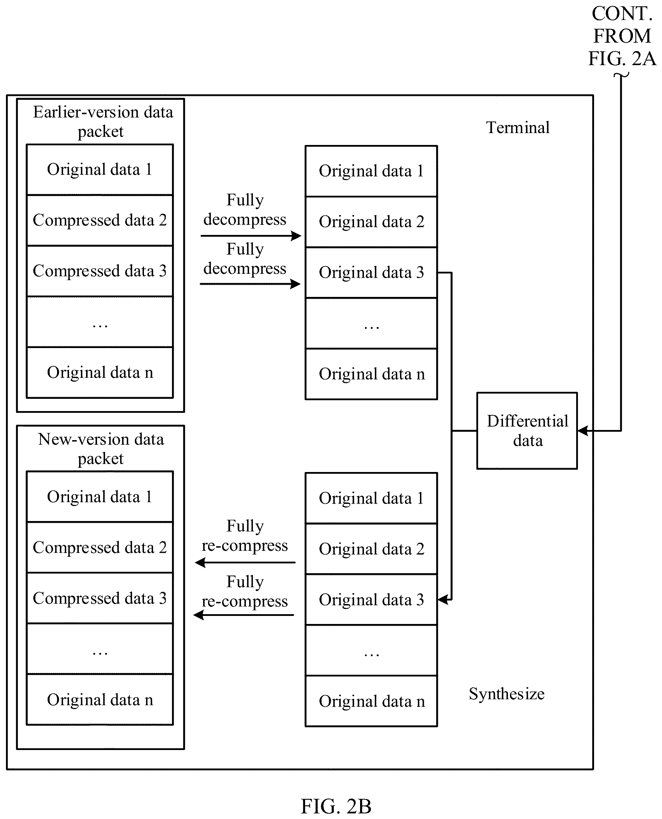

For example, FIG. 2A and FIG. 2B are a diagram of performing differential update in the related technology 2. For compressed data, a server in the related technology 2 may first fully decompress the compressed data to obtain original data before compression. For example, the server fully decompresses compressed data 2 in an earlier-version data packet to obtain original data 2 of an earlier version, and fully decompresses compressed data 2 in a new-version data packet to obtain original data 2 of a new version. Then, the server performs differential calculation on the corresponding original data in the new version and in the earlier version, and determines differential data between the two pieces of corresponding original data to obtain differential data between the earlier-version data packet and the new-version data packet. A terminal may also fully decompress the compressed data in the earlier-version data packet stored in the terminal to obtain the corresponding original data, synthesize the original data obtained through decompression and the differential data sent by the server into original data of the new version, and then fully re-compress original data that needs to be compressed in the new version to obtain compressed data of the new version, so that the earlier-version data packet is updated, to obtain the new-version data packet.

Different terminals may use different compression and decompression methods for data, and the different compression and decompression methods may depend on different compression and decompression tools. Therefore, in the related technology 2, for different compression and decompression methods of different terminals, the server needs to use a compression and decompression method same as that of the terminal to fully decompress the data in the earlier-version data packet and the data in the new-version data packet, to obtain the differential data, so as to ensure that the terminal can correctly identify the differential data, and fully decompress the earlier-version data packet in the terminal based on the differential data, so that the data in the earlier-version data packet is updated based on the original data obtained through full decompression and the differential data. In other words, only when the server and the terminal use the same compression and decompression method, it can be ensured that content and bytes of the data in the new-version data packet of the server are consistent with those of the data in the new-version data packet obtained by the terminal through synthesis based on the differential data, and that signatures used to identify versions are consistent.

However, the full decompression and compression technology used in the archive-patcher technology depends on the zlib library. In other words, the archive-patcher technology is limited by a compression method, and compressed data that is in the data packet and that is compressed by using the zlib library can only be fully decompressed. If there is compressed data that is in the earlier-version data packet stored in the terminal and that is obtained through compression in another method, the server cannot fully decompress the earlier-version data packet by using the archive-patcher technology, and cannot obtain differential data that can be identified by the terminal.

It can be learned that, if the compression and decompression method used by the server is not a universal method for all terminals, the differential data sent by the server to the terminal cannot be identified by the terminal, and the terminal cannot complete data update based on the differential data. If the server needs to ensure that the differential data can be identified by different terminals, the server needs to have a plurality of different compression and decompression methods, and have compression and decompression tools on which the plurality of different compression and decompression methods depend, resulting in an increase in load of the server. In addition, although accuracy of the differential data determined by the server can be ensured by fully decompressing the compressed data, a time required for performing full decompression is long, and times required for performing full decompression in different decompression methods are different. As a result, it is difficult to ensure efficiency of determining the differential data by the server. The terminal also needs to fully decompress data that needs to be updated, and fully re-compress the original data of the new-version after updating the original data based on the differential data. Consequently, a time required for data update is long, efficiency is low, and user experience is affected.

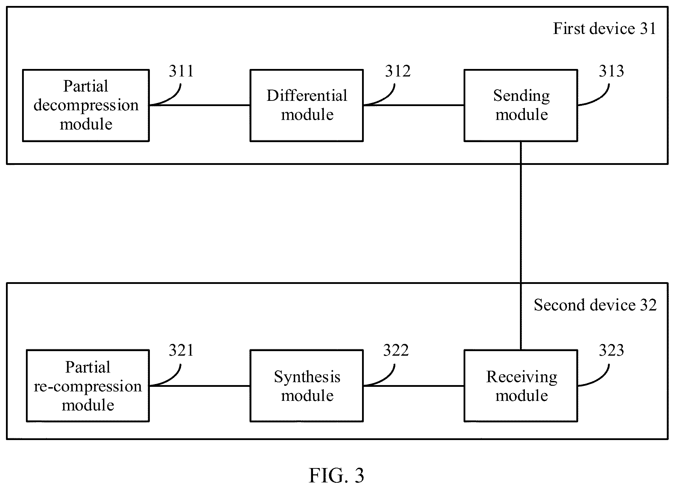

Embodiments of this application provide a data update method, to improve efficiency of determining differential data, and ensure accuracy of the determined differential data, thereby ensuring that data update is completed accurately and efficiently. For example, FIG. 3 is a diagram of an implementation scenario of the method. The implementation scenario includes a first device 31 and a second device 32. The first device 31 includes a partial decompression module 311, a differential module 312, and a sending module 313, and the second device 32 includes a partial re-compression module 321, a synthesis module 322, and a receiving module 323. The first device 31 and the second device 32 are communicatively connected via the sending module 313 and the receiving module 323. The first device 31 may be a device used for data update in an application market, for example, a server or a server side. The second device 32 may be a client or an internet of things terminal, for example, may be an intelligent device, for example, a mobile phone, a tablet computer, or a personal computer.

The partial decompression module 311 is configured to partially decompress compressed data, that is, the partial decompression module 311 does not fully decompress compressed data into original data, but decompress the compressed data into intermediate data. Correspondingly, the partial re-compression module 321 is configured to partially re-compress the intermediate data, that is, the partial re-compression module 321 does not fully compress the original data into the compressed data, but further compresses the compressed intermediate data to obtain the compressed data.

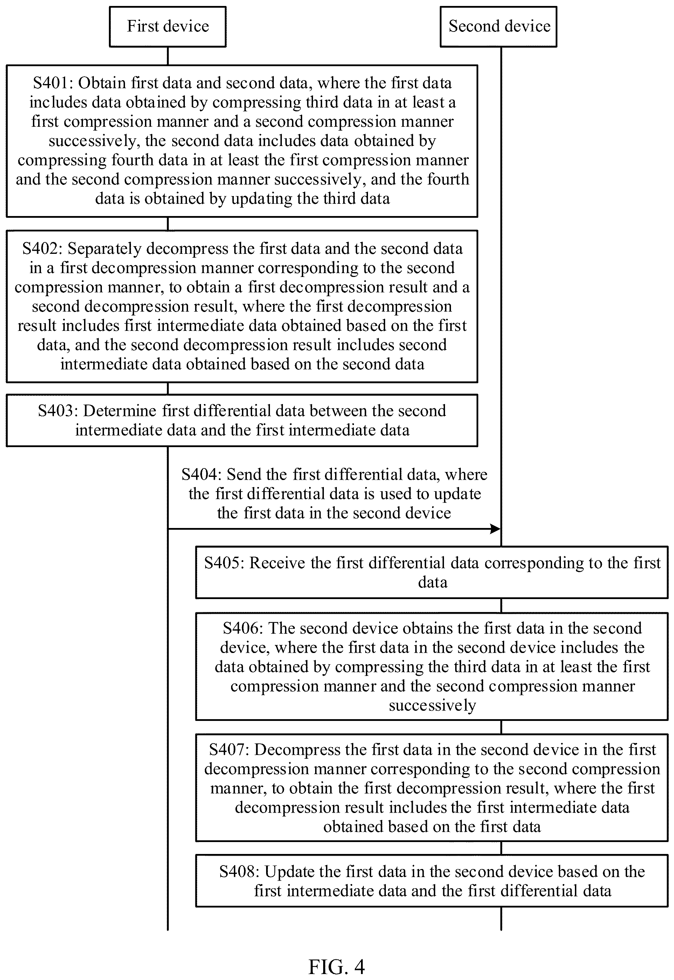

FIG. 4 is a schematic flowchart of a data update method according to an embodiment of this application. The method may be applied to the implementation scenario shown in FIG. 3, and the method includes but is not limited to the following S401 to S408.

S401: A first device obtains first data and second data, where the first data includes data obtained by compressing third data in at least a first compression manner and a second compression manner successively, the second data includes data obtained by compressing fourth data in at least the first compression manner and the second compression manner successively, and the fourth data is obtained by updating the third data. The first data may also be referred to as a first file, and the first data includes at least one data segment. Correspondingly, the second data may also be referred to as a second file, and the second data includes at least one data segment.

In a possible implementation, the first data and the second data may be obtained by obtaining a first data packet including at least one piece of first compressed data and a second data packet including at least one piece of second compressed data. The first data may be first compressed data that is in the first data packet and that is different from the at least one piece of second compressed data, and the second data may be second compressed data that is in the second data packet and that is different from the at least one piece of first compressed data.

Optionally, the first data packet may be an earlier-version data packet of the second device, and the second data packet may be a new-version data packet. A method in which the first device obtains the first data packet and the second data packet is not limited in this embodiment of this application. For example, the first device may receive an update request sent by the second device, where the update request carries a version number of the earlier-version data packet on the second device. The first device determines, based on the version number of the earlier-version data packet on the second device, the earlier-version data packet of the second device from a plurality of versions of data packets stored in the first device, determines the new-version data packet, determines the earlier-version data packet of the second device as the first data packet, and determines the new-version data packet as the second data packet.

The first data packet includes at least one piece of first compressed data, and the second data packet includes at least one piece of second compressed data. The first device may determine, by comparing the first compressed data with the second compressed data, first compressed data that is in the first data packet and that is different from the second compressed data as the first data, and determine, by comparing the first compressed data with the second compressed data, second compressed data that is in the second data packet and that is different from the first compressed data as the second data. For first compressed data that is the same as the second compressed data, it may be considered that the first compressed data does not need to be updated during data update. Therefore, the first compressed data may not be determined as the first data.

The determined first data may be the data obtained by compressing the third data in the first compression manner and the second compression manner successively. The first compression manner and the second compression manner are not limited in this embodiment of this application. The first compression manner and the second compression manner each may include one or more compression manners. Compressing the data in the first compression manner may be compressing the data once or more times in the first compression manner, and compressing the data in the second compression manner may be compressing the data once or more times in the second compressed data. Optionally, before or after the third data and the fourth data are compressed in the first compression manner and the second compression manner successively, the third data and the fourth data may alternatively be compressed in a compression manner other than the first compression manner and the second compression manner.

The following uses deflate (deflate) compression as an example to describe a process of obtaining the first data. The deflate compression may be a lossless data compression manner in which both an LZ77 (a compression manner in which data compression is performed by using a dictionary) compression manner and a Huffman compression manner based on a Huffman coding (Huffman coding) tree are used. Compressed data obtained by performing compression in the deflate compression manner may be referred to as a deflate compressed stream, deflate compressed data, or a deflate file. The LZ77 compression manner is the first compression manner, and the Huffman compression manner is the second compression manner.

After obtaining the third data, the first device performs LZ77 compression on the third data, that is, compresses the third data in the first compression manner to obtain first intermediate data. Then, the first device may perform Huffman compression on the first intermediate data, that is, compress the first intermediate data in the second compression manner to obtain the first data. A process in which the first device compresses the fourth data in the first compression manner and the second compression manner successively is the same as the process in which the first device compresses the third data in the first compression manner and the second compression manner successively. Details are not described herein again.

The process of compressing the third data to obtain the first data and the process of compressing the fourth data to obtain the second data are processes before the first device obtains the first data packet and the second data packet. Therefore, the first data and the second data that are obtained by the first device through the first data packet and the second data packet are compressed data. Alternatively, processes in which the first device obtains the first data and the second data does not involve the process of compressing the third data to obtain the first data and the process of compressing the fourth data to obtain the second data.

S402: The first device separately decompresses the first data and the second data in a first decompression manner corresponding to the second compression manner to obtain a first decompression result and a second decompression result, where the first decompression result includes first intermediate data obtained based on the first data, and the second decompression result includes second intermediate data obtained based on the second data.

After determining the first data that needs to be updated and the second data corresponding to the first data, the first device may separately decompress the first data and the second data in the first decompression manner to obtain the first decompression result including the first intermediate data and the second decompression result including the second intermediate data. The first intermediate data is data obtained by compressing the third data in the first compression manner, and correspondingly, the second intermediate data is data obtained by compressing the fourth data in the first compression manner.

An example in which the first data and the second data are the deflate compressed data is still used. The first decompression manner is a decompression manner corresponding to the second compression manner, that is, the first decompression manner is a Huffman decompression manner corresponding to the Huffman compression manner, and the Huffman decompression manner may also be referred to as Huffman decoding. After the first data is decompressed in the Huffman decompression manner, the first decompression result is obtained, where the first decompression result includes the first intermediate data, and the first intermediate data is data obtained by compressing the third data in the LZ77 compression manner. After the second data is decompressed in the Huffman decompression manner, the second decompression result is obtained, where the second decompression result includes the second intermediate data, and the second intermediate data is data obtained by compressing the fourth data in the LZ77 compression manner. The first intermediate data and the second intermediate data may include a list (LIST) bit segment and an offset (DIST) bit segment.

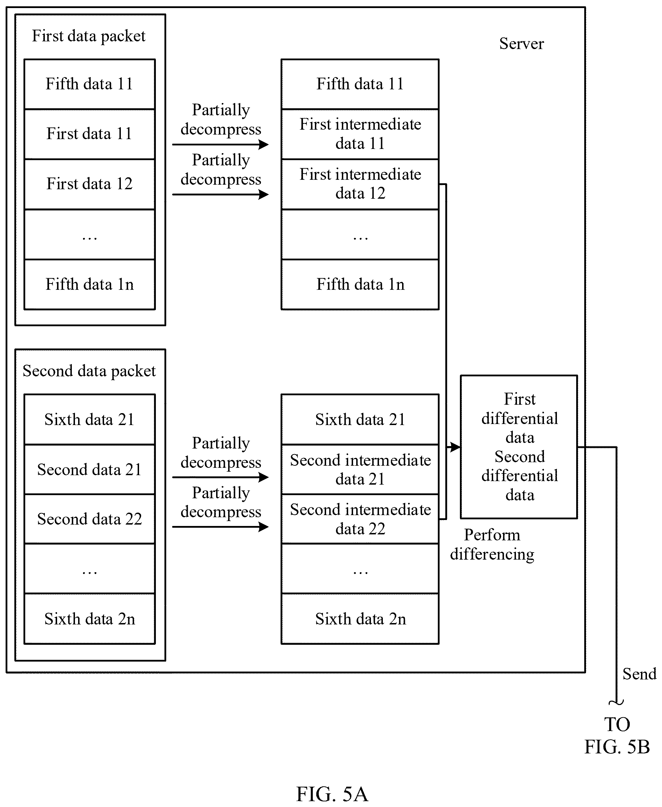

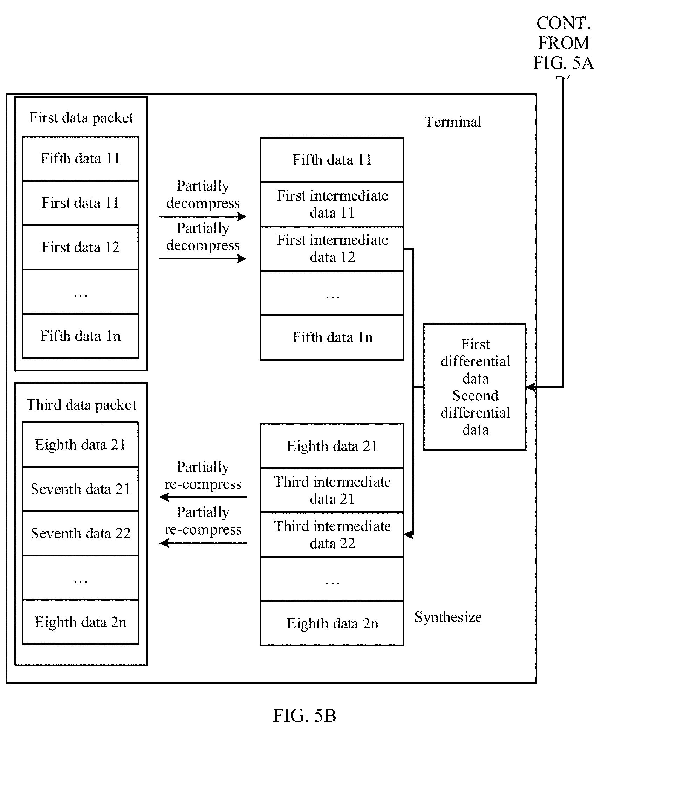

For example, FIG. 5A and FIG. 5B are a schematic flowchart of data update. The first data packet obtained by the first device includes first data 11, first data 12, and other first data that is not shown in FIG. 5A and FIG. 5B, and the obtained second data packet includes second data 21, second data 22, and other second data that is not shown in FIG. 5A and FIG. 5B. The partial decompression module in the first device partially decompresses the first data 11 in the first data packet, that is, decompresses the first data 11 in the first decompression manner to obtain first intermediate data 11. The partial decompression module partially decompresses the first data 12 to obtain first intermediate data 12. The partial decompression module in the first device partially decompresses the second data 21 in the second data packet, that is, decompresses the second data 21 in the first decompression manner to obtain second intermediate data 21. The partial decompression module partially decompresses the second data 22 to obtain second intermediate data 22.

S403: The first device determines first differential data between the second intermediate data and the first intermediate data.

Because there is a correspondence between the first data and the second data, that is, the second data is obtained by updating the corresponding first data, there are same partial data and different partial data between the first data and the second data. The first device may determine the different partial data between the first data and the second data as the first differential data, and the first differential data is used by the second device to perform differential update on the first data. Alternatively, the first device may determine an offset corresponding to the different partial data between the first data and the second data as the first differential data. The differential update may also be referred to as incremental update.

For example, refer to FIG. 5A and FIG. 5B. The differential module in the first device may perform differencing on the first data 11 and the second data 21 corresponding to the first data 11, to determine first differential data between the first data 11 and the second data 21.

In a possible implementation, the first decompression result further includes first reference data corresponding to the first data, the first reference data is data referenced in a process of compressing the first intermediate data in the second compression manner to obtain the first data, the second decompression result further includes second reference data corresponding to the second data, and the second reference data is data referenced in a process of compressing the second intermediate data in the second compression manner to obtain the second data For example, the first reference data may include data indicating a correspondence between each data segment in the first intermediate data and each data segment in the first data, and the second reference data may include data indicating a correspondence between each data segment in the second intermediate data and each data segment in the second data.

In this case, after determining the first differential data between the second intermediate data and the first intermediate data, the first device may further determine, based on the first differential data, the first reference data, and the second reference data, reference data corresponding to the first differential data. For example, the first decompression result obtained by partially decompressing the first data by the first device includes the first intermediate data and the first reference data, and the second decompression result obtained by partially decompressing the second data by the first device includes the second intermediate data and the second reference data. There is a correspondence between the first intermediate data and the first reference data, and there is a correspondence between the second intermediate data and the second reference data. After determining the first differential data between the first intermediate data and the second intermediate data, the first device may determine, in the first reference data and the second reference data based on the first differential data, the reference data corresponding to the first differential data.

For example, the first data and the second data are data obtained through deflate compression. In a process of performing Huffman decompression on the first data, the first device can not only obtain the first intermediate data, but also obtain the first reference data corresponding to the first intermediate data. The first reference data may include a Huffman code table referenced when Huffman compression is performed on the third data, and the Huffman code table includes a bit segment referenced when Huffman compression is performed on each data segment in the first intermediate data. For example, the Huffman code table may include a header (HEADER) bit segment, a code length (code-code lengths, CCL) bit segment, a sequence (sequence, SQ) 1 bit segment, and an SQ 2 bit segment. Correspondingly, a Huffman code table included in the second reference data may also include a bit segment referenced when Huffman compression is performed on each data segment in the second intermediate data. The first reference data and the second reference data may be the same or may be different. This is not limited in embodiments of this application.

The first device may determine, in the first reference data and the second reference data based on a data segment included in the first differential data, a bit segment corresponding to the data segments included in the first differential data, where a bit segment corresponding to each data segment included in the first differential data is the reference data corresponding to the first differential data.

S404: The first device sends the first differential data, where the first differential data is used to update the first data in the second device.

The first device may send the first differential data to the second device via the sending module. For example, the first device may encapsulate a plurality of pieces of first intermediate data corresponding to a plurality of pieces of first differential data and a plurality of pieces of second intermediate data into a same differential packet, and send the same differential packet to the second device. For example, refer to FIG. 5A and FIG. 5B. The first device may encapsulate first differential data 1 between the first intermediate data 11 and the second intermediate data 21 and first differential data 2 between the first intermediate data 12 and the second intermediate data 22 into a same differential packet, and send the differential packet to the second device via the sending module.

Optionally, the first device may further send reference data to the second device, where the reference data is used to update the first data in the second device. For example, the first device may separately send the reference data to the second device, or may encapsulate the reference data and the first differential data into a same differential packet and send the differential packet to the second device.

In a possible implementation, the first device may further obtain fifth data and sixth data, where the fifth data and the first data are of different types, and the sixth data and the second data are of different types; and determine second differential data between the fifth data and the sixth data. Both the fifth data and the first data may belong to the first data packet, both the sixth data and the second data may belong to the second data packet, and the fifth data and the sixth data may be uncompressed original data, that is, the fifth data and the sixth data are stored in the first data packet and the second data packet in a direct storage (store) manner. Because the sixth data may be data obtained by updating the fifth data, the first device may also perform differencing on the fifth data and the sixth data to obtain the second differential data between the fifth data and the sixth data.

For example, refer to FIG. 5A and FIG. 5B. In addition to the first data 11 and the first data 12, the first data packet further includes fifth data 11 to fifth data 1n, and in addition to the second data 21 and the second data 22, the second data packet further includes sixth data 21 to sixth data 2n. The first device may compare the fifth data 11 with the sixth data 21, and determine different partial data between the fifth data 11 and the sixth data 21 as the second differential data between the fifth data 11 and the sixth data 21.

Optionally, after determining the second differential data, the first device may send the second differential data to the second device, where the second differential data is used to update the fifth data in the second device. In addition, the first device may separately send the second differential data to the second device, or may encapsulate the second differential data and the first differential data into a same differential packet and send the differential packet to the second device.

S405: The second device receives the first differential data corresponding to the first data.

After the first device sends the first differential data to the second device via the sending module, the second device may receive the first differential data via the receiving module. For example, the second device may receive a differential packet that is sent by the first device and that includes the first differential data, to receive the first differential data.

S406: The second device obtains the first data in the second device, where the first data in the second device includes the data obtained by compressing the third data in at least the first compression manner and the second compression manner successively.

A method in which the second device obtains the first data is not limited in this embodiment of this application. For example, the second device may determine, from a plurality of stored data packets, the first data packet that needs to be updated, and determine the at least one piece of first compressed data in the first data packet. Then, the second device may determine, in the at least one piece of first compressed data based on the first differential data, the first data that needs to be updated and that corresponds to the first differential data.

S407: The second device decompresses the first data in the second device in the first decompression manner corresponding to the second compression manner to obtain the first decompression result, where the first decompression result includes the first intermediate data obtained based on the first data.

For example, refer to FIG. 5A and FIG. 5B, the second device may partially decompress the first data 11 in the first data packet, that is, decompress the first data 11 in the first decompression manner to obtain the first intermediate data 11, and partially decompress the first data 12 to obtain the first intermediate data 12. The first intermediate data 11 and the first intermediate data 12 may be included in a same first decompression result, or may be separately included in two first decompression results. This is not limited in embodiments of this application.

S408: The second device updates the first data in the second device based on the first intermediate data and the first differential data.

A process in which the second device updates the first data based on the first intermediate data and the first differential data is not limited in this embodiment of this application. For example, in this embodiment of this application, the following two different Case A1 and Case A2 are used as examples to describe the process of updating the first data.

Case A1: Update the first intermediate data based on the first differential data to obtain the third intermediate data; compress the third intermediate data in the second compression manner to obtain seventh data; and update the first data in the second device to the seventh data.

A method for updating the first intermediate data based on the first differential data is not limited in this embodiment of this application. For example, data that is in the first differential data and that needs to be added to the first intermediate data may be correspondingly added to the first intermediate data, or partial data in the first intermediate data is replaced with partial data in the first differential data. The third intermediate data obtained by synthesizing the first intermediate data obtained through update based on the first differential data is the same as the second intermediate data.

After the third intermediate data is obtained, the partial re-compression module of the second device may partially re-compress the third intermediate data, that is, compress the third intermediate data based on the second compression manner to obtain the seventh data. For example, the third intermediate data is data obtained through LZ77 compression, the second compression manner is Huffman compression, and the partial re-compression module may perform Huffman compression on the third intermediate data to obtain the seventh data. The seventh data is the updated first data, and the seventh data is the same as the second data in the second data packet in the first device. The second device may update the first data in the first data packet to the seventh data, to update the first data packet.

For example, refer to FIG. 5A and FIG. 5B. The partial re-compression module of the second device may partially re-compress the third intermediate data 21 obtained through synthesis, to obtain seventh data 21, where the seventh data 21 is the same as the second data 21. The partial re-compression module of the second device may partially re-compress the third intermediate data 22 to obtain seventh data 22, where the seventh data 22 is the same as the second data 22.

Case A2: Update the first intermediate data based on the first differential data to obtain the third intermediate data; compress the third intermediate data in the second compression manner based on the reference data corresponding to the first differential data to obtain seventh data; and update the first data in the second device to the seventh data.

In Case A2, a process of obtaining the third intermediate data based on the first differential data and the first intermediate data may be the same as the process of obtaining the third intermediate data based on the first differential data and the first intermediate data in Case A1. Details are not described herein again.

When partially re-compressing the third intermediate data, the second device may reference the reference data corresponding to the first differential data, to further ensure that the seventh data obtained through partial re-compression is the same as the second data. The reference data may be, for example, a Huffman code table corresponding to the first differential data. Therefore, before compressing the third intermediate data in the second compression manner based on the reference data to obtain the seventh data, the second device may further receive the reference data. For example, the second device may receive the reference data separately sent by the first device, or may receive the reference data by receiving a differential packet that is sent by the first device and that includes the reference data.

The seventh data is the updated first data, and the seventh data is the same as the second data in the second data packet in the first device. The second device may update the first data in the first data packet to the seventh data, to update the first data packet.

In a possible implementation, the second device may further update the fifth data in the second device based on the second differential data corresponding to the fifth data to obtain eighth data, where both the fifth data and the first data belong to the first data packet, and the fifth data in the second device and the first data in the second device are of different types; and replace the fifth data in the second device with the eighth data. A process of obtaining the eighth data based on the second differential data and the fifth data may be the same as the process of obtaining the third intermediate data based on the first differential data and the first intermediate data in Case A1. Details are not described herein again.

Optionally, before updating the fifth data based on the second differential data to obtain the eighth data, the second device may further receive the second differential data corresponding to the fifth data. For example, the second device may receive the second differential data separately sent by the first device, or may receive the second differential data by receiving a differential packet that is sent by the first device and that includes the second differential data.

For example, refer to FIG. 5A and FIG. 5B. The second device may synthesize the fifth data 11 and the second differential data to obtain eighth data 21, and synthesize the fifth data 1n and the second differential data to obtain eighth data 2n. The eighth data is the updated fifth data, and the eighth data is the same as the sixth data in the second data packet in the first device. The second device may update the fifth data in the first data packet to the eighth data, to update the first data packet.

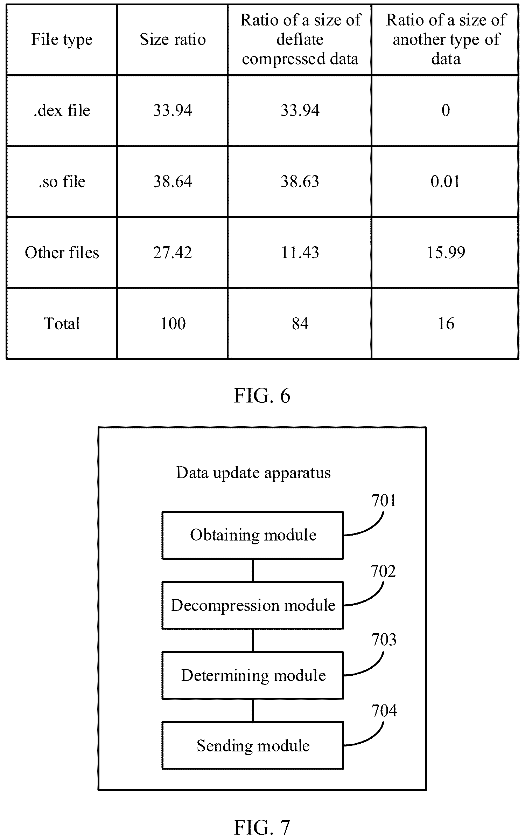

FIG. 6 is a diagram of file composition of a data packet. The diagram is obtained by analyzing a plurality of different pieces of composition of the data packet. A .dex file occupies 33.94% of a total size of the data packet, and deflate compressed data in the .dex file occupies 33.94% of the total size of the data packet. In other words, all data in the .dex file is stored in the data packet in a deflate data compression manner. A .so file occupies 38.64% of the total size of the data packet, and deflate compressed data in the .so file occupies 38.63% of the total size of the data packet. In other words, almost all data in the .so file is stored in the data packet in a deflate data compression manner, and only 0.01% of data in the .so file is stored in the data packet in a manner of another type of data. Other files occupy 27.42% of the total size of the data packet, and deflate compressed data in the other files occupies 11.43% of the total size of the data packet. 15.99% of data in the other files is stored in the data packet in a manner of another type of data. According to the analysis, on average, 84% of the data in the data packet is stored in the data packet in the deflate data compression manner, and only 16% of the data is stored in the data packet in the manner of another type of data. In other words, if the data in the data packet is updated in the method provided in this embodiment of this application, update efficiency and accuracy of most data in the data packet can be improved, to improve efficiency and accuracy of updating the data packet.

In addition, the data update method provided in this embodiment of this application can further effectively reduce a compression ratio of differential data. The compression ratio of the differential data may be a ratio of a size of the differential data to a size of a new-version data packet. According to statistical analysis, an average compression ratio of the differential data obtained by not using the data update method provided in this embodiment of this application is 66.80%, and an average compression ratio of the differential data obtained by using the data update method provided in this embodiment of this application is 51.79%. It can be learned that, in the data update method provided in this embodiment of this application, the size of the differential data can be reduced by 22.47% on average compared with a case in which the data update method is not used.

In the related technology 1, the differential data is generated by comparing the new-version data and the earlier-version data. The compressed data is not decompressed, so that the differential data determined based on the two pieces of compressed data is inaccurate, and the size of the differential data is increased, thereby causing redundancy of the differential data.

In the related technology 2, it takes the long time to determine the differential data, and the times required for performing full decompression in the different compression methods or tools are different. As a result, it is difficult to ensure efficiency of determining the differential data by the first device, and the second device also needs to fully decompress the data that needs to be updated, and fully re-compress the original data of the new-version after updating the original data based on the differential data. Consequently, the time required for data update is long, efficiency is low, and user experience is affected.

In this embodiment of this application, the first differential data can be accurately and efficiently determined based on similarity between the first intermediate data and the second intermediate data that are obtained through partial decompression, and the first data can be updated based on the first differential data and the first intermediate data with no need to fully decompress the first data, thereby improving efficiency and stability of data update.

Because a difference between similarity between a first intermediate file and a second intermediate file and similarity between the first data and the second data before compression is small, this application can ensure accuracy of the determined differential data, fully utilize a capability of the differential algorithm, and reduce a size of the differential data and a time and space consumed for calculating the differential data. According to the data determining method provided in this embodiment of this application, dependency on a non-general compression tool is avoided, and a problem that update cannot be performed due to different compression methods and tools is resolved.

In addition, the first compression manner and the second compression manner used in this embodiment of this application may be compression manners that can be used by different second devices, and do not need to rely on an additional compression tool or compression database. Therefore, the data update method provided in this embodiment of this application has good universality, and can ensure that content and bytes of the data in the new-version data packet of the first device are consistent with those of the data in the new-version data packet obtained by the second device through synthesis based on the differential data, and that signatures used to identify versions are consistent.

The data update method provided in embodiments of this application is described above. In correspondence to the foregoing method, embodiments of this application further provide a data update apparatus. The apparatus is used in a first device. The apparatus is configured to perform, by using modules shown in FIG. 7, the data update method performed by the first device in FIG. 4. As shown in FIG. 7, the data update apparatus provided in embodiments of this application includes the following modules:
an obtaining module 701, configured to obtain first data and second data, where the first data includes data obtained by compressing third data in at least a first compression manner and a second compression manner successively, the second data includes data obtained by compressing fourth data in at least the first compression manner and the second compression manner successively, and the fourth data is obtained by updating the third data; a decompression module 702, configured to separately decompress the first data and the second data in a first decompression manner corresponding to the second compression manner to obtain a first decompression result and a second decompression result, where the first decompression result includes first intermediate data obtained based on the first data, and the second decompression result includes second intermediate data obtained based on the second data; a determining module 703, configured to determine first differential data between the second intermediate data and the first intermediate data; and a sending module 704, configured to send the first differential data, where the first differential data is used to update the first data in a second device.

In a possible implementation, the first decompression result further includes first reference data corresponding to the first data, the first reference data is data referenced in a process of compressing the first intermediate data in the second compression manner to obtain the first data, the second decompression result further includes second reference data corresponding to the second data, and the second reference data is data referenced in a process of compressing the second intermediate data in the second compression manner to obtain the second data; the determining module 703 is further configured to determine, based on the first differential data, the first reference data, and the second reference data, reference data corresponding to the first differential data; and the sending module 704 is further configured to send the reference data, where the reference data is used to update the first data in the second device.

In a possible implementation, the obtaining module 701 is further configured to obtain a first data packet including at least one piece of first compressed data and a second data packet including at least one piece of second compressed data, where the first data is first compressed data that is in the first data packet and that is different from the at least one piece of second compressed data, and the second data is second compressed data that is in the second data packet and that is different from the at least one piece of first compressed data.

In a possible implementation, the obtaining module 701 is further configured to obtain fifth data and sixth data, where the fifth data and the first data are of different types, and the sixth data and the second data are of different types; the determining module 703 is further configured to determine second differential data between the fifth data and the sixth data; and the sending module 704 is further configured to send the second differential data, where the second differential data is used to update the fifth data in the second device.

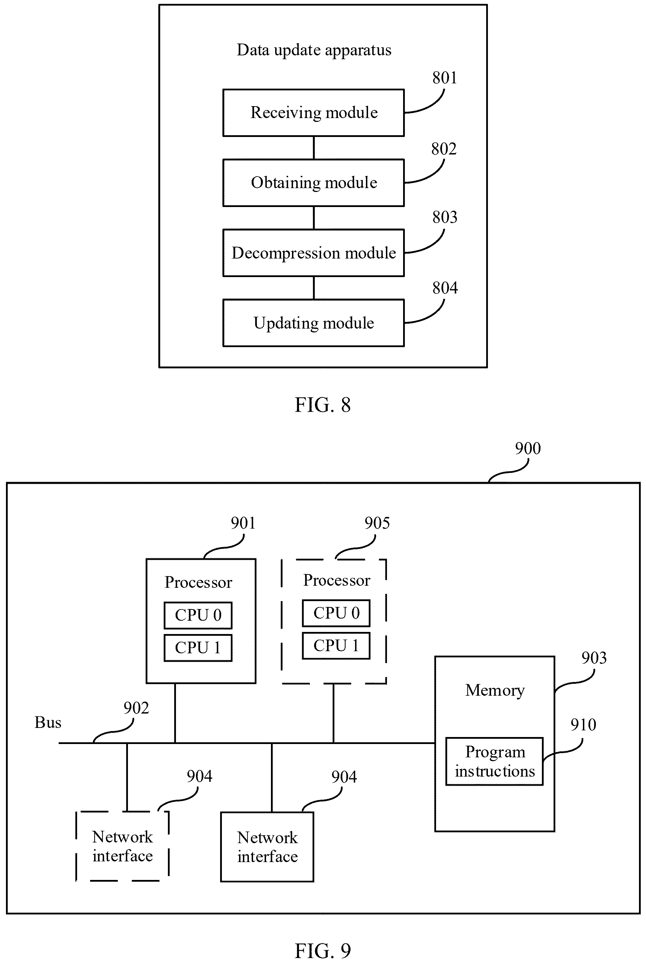

An embodiment of this application further provides a data update apparatus. The apparatus is used in a second device. The apparatus is configured to perform, by using modules shown in FIG. 8, the data update method performed by the second device in FIG. 4. As shown in FIG. 8, the data update apparatus provided in embodiments of this application includes the following modules.
a receiving module 801, configured to receive first differential data corresponding to first data; an obtaining module 802, configured to obtain the first data in the second device, where the first data in the second device includes data obtained by compressing third data in at least a first compression manner and a second compression manner successively; a decompression module 803, configured to decompress the first data in a first decompression manner corresponding to the second compression manner to obtain a first decompression result, where the first decompression result includes first intermediate data obtained based on the first data; and an updating module 804, configured to update the first data in the second device based on the first intermediate data and the first differential data.

In a possible implementation, the updating module 804 is configured to: update the first intermediate data based on the first differential data to obtain third intermediate data; compress the third intermediate data in the second compression manner to obtain seventh data; and update the first data in the second device to the seventh data.

In a possible implementation, the updating module 804 is configured to: update the first intermediate data based on the first differential data to obtain third intermediate data; compress the third intermediate data in the second compression manner based on reference data corresponding to the first differential data to obtain seventh data; and update the first data in the second device to the seventh data.

In a possible implementation, the receiving module 801 is further configured to receive the reference data.

In a possible implementation, the updating module 804 is further configured to: update fifth data in the second device based on second differential data corresponding to the fifth data to obtain eighth data, where the fifth data and the first data are of different types; and update the fifth data in the second device to the eighth data.

In a possible implementation, the receiving module 801 is further configured to receive the second differential data.

It should be understood that, when the apparatus provided in FIG. 7 or FIG. 8 implements a function of the apparatus, beneficial effect of the apparatus is the same as beneficial effect of the data update method provided in FIG. 4. Details are not described herein again. When the apparatus provided in FIG. 7 or FIG. 8 implements the functions of the apparatus, division into the foregoing functional modules is merely used as an example for description. In an actual application, the foregoing functions may be allocated and implemented by different functional modules based on requirements, that is, an internal structure of a device is divided into different functional modules, to implement all or some of the foregoing described functions. In addition, the apparatuses provided in the foregoing embodiments and the method embodiments pertain to a same concept. For specific implementation processes of the apparatuses, refer to the method embodiments. Details are not described herein again.

FIG. 9 is a diagram of a structure of an example of a data update device 900 according to this application. The data update device 900 includes at least one processor 901, a memory 903, and at least one network interface 904.

The processor 901 is, for example, a general-purpose central processing unit (central processing unit, CPU), a digital signal processor (digital signal processor, DSP), a network processor (network processor, NP), a neural-network processing unit (neural-network processing unit, NPU), a data processing unit (Data Processing Unit, DPU), a microprocessor, or one or more integrated circuits, application-specific integrated circuits (application-specific integrated circuits, ASIC), programmable logic devices (programmable logic devices, PLD), other general-purpose processors or other programmable logic devices, discrete gates, transistor logic devices, or discrete hardware components that are configured to implement the solutions of this application, or any combination thereof. The PLD is, for example, a complex programmable logic device (complex programmable logic device, CPLD), a field-programmable gate array (field-programmable gate array, FPGA), a generic array logic (generic array logic, GAL), or any combination thereof. The general-purpose processor may be a microprocessor, any conventional processor, or the like. It should be noted that the processor may be a processor that supports an advanced reduced instruction set computer machines (advanced RISC machines, ARM) architecture. The processor may implement or execute various logical blocks, modules, and circuits described with reference to content disclosed in this application. Alternatively, the processor may be a combination implementing a computing function, for example, a combination including one or more microprocessors, or a combination of the DSP and the microprocessor.

Optionally, the data update device 900 further includes a bus 902. The bus 902 is configured to transfer information between components of the data update device 900. The bus 902 may be a peripheral component interconnect (peripheral component interconnect, PCI for short) bus, an extended industry standard architecture (extended industry standard architecture, EISA for short) bus, or the like. Buses 902 may be classified into an address bus, a data bus, a control bus, and the like. For ease of representation, only one line is used in FIG. 9 to represent the bus, but it does not indicate that there is only one bus or only one type of bus.

The memory 903 is, for example, a volatile memory or a non-volatile memory, or may include both a volatile memory and a non-volatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache.

By way of example, and not limitation, many forms of ROMs and RAMs are available. For example, the ROM is a compact disc read-only memory (compact disc read-only memory, CD-ROM). The RAM includes but is not limited to a static random access memory (static RAM, SRAM), a dynamic random access memory (dynamic random access memory, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), or a direct rambus random access memory (direct rambus RAM, DR RAM).

Alternatively, the memory 903 may be another type of storage device that can store static information and instructions. Alternatively, the memory 903 may be another type of dynamic storage device that can store information and instructions. Alternatively, the memory 903 may be other compact disc storage, optical disc storage (including a compact disc, a laser disc, an optical disc, a digital versatile disc, a Blu-ray disc, and the like), a magnetic disk storage medium, or another magnetic storage device, or any other medium that can be used to carry or store expected program code in a form of an instruction or a data structure and that can be accessed by a computer, but is not limited thereto. For example, the memory 903 exists independently, and is connected to the processor 901 through the bus 902. The memory 903 may alternatively be integrated with the processor 901.

The network interface 904 is configured to communicate with another device or a communication network through any transceiver-like apparatus. The communication network may be an Ethernet, a radio access network (radio access network, RAN), a wireless local area network (wireless local area network, WLAN), or the like. The network interface 904 may include a wired network interface, and may further include a wireless network interface. Specifically, the network interface 904 may be an Ethernet (Ethernet) interface, for example, a fast Ethernet (Fast Ethernet, FE) interface, a gigabit Ethernet (Gigabit Ethernet, GE) interface, an asynchronous transfer mode (Asynchronous Transfer Mode, ATM) interface, a WLAN interface, a cellular network interface, or a combination thereof. The ethernet interface may be an optical interface, an electrical interface, or a combination thereof. In some implementations of this application, the network interface 904 may be used by the data update device 900 to communicate with another device.

During specific implementation, in some implementations, the processor 901 may include one or more CPUs, for example, a CPU 0 and a CPU 1 shown in FIG. 9. Each of the processors may be a single-core processor or a multi-core processor. The processor herein may be one or more devices, circuits, and/or processing cores configured to process data (for example, computer program instructions).

In specific implementation, in some implementations, the data update device 900 may include a plurality of processors, for example, a processor 901 and a processor 905 shown in FIG. 9. Each of the processors may be a single-core processor or a multi-core processor. The processor herein may be one or more devices, circuits, and/or processing cores configured to process data (for example, computer program instructions).

In some implementation, the memory 903 is configured to store program instructions 910 for executing the solutions of this application, and the processor 901 may execute the program instructions 910 stored in the memory 903. In other words, the data update device 900 may implement, by using the processor 901 and the program instructions 910 in the memory 903, the method provided in the method embodiment, that is, the method shown in FIG. 4. The program instructions 910 may include one or more software modules. Optionally, the processor 901 itself may also store the program instructions for executing the solutions in this application.

In a specific implementation process, the data update device 900 in this application may correspond to the first network element device configured to perform the foregoing method. The processor 901 in the data update device 900 reads instructions in the memory 903, so that the data update device 900 shown in FIG. 9 can perform all or a part of the steps in the method embodiment.

The data update device 900 may further correspond to the apparatus shown in FIG. 7 or FIG. 8. Each functional module in the apparatus shown in FIG. 7 or FIG. 8 is implemented by using software of the data update device 900. In other words, the functional modules included in the apparatus shown in FIG. 7 or FIG. 8 are generated after the processor 901 of the data update device 900 reads the program instructions 910 stored in the memory 903.

The steps of the method shown in FIG. 4 are completed by using a hardware integrated logic circuit in the processor of the data update device 900, or by using instructions in a form of software. The steps in the method embodiment disclosed with reference to this application may be directly performed and completed by a hardware processor, or may be performed and completed by using a combination of hardware in the processor and a software module. A software module may be located in a mature storage medium in the art, such as a random access memory, a flash memory, a read-only memory, a programmable read-only memory, an electrically erasable programmable memory, or a register. The storage medium is located in the memory, and the processor reads information in the memory, and completes the steps in the foregoing method embodiment in combination with hardware of the processor. To avoid repetition, details are not described herein again.

In an example embodiment, a data update system is provided. The system includes a first device and a second device. The first device is configured to perform the method performed by the first device in FIG. 4, and the second device is configured to perform the method performed by the second device in FIG. 4.

In an example embodiment, a computer program (product) is provided. The computer program (product) includes computer program code. When the computer program code is run by a computer, the computer is enabled to perform the method shown in FIG. 4.

In an example embodiment, a computer-readable storage medium is provided. The computer-readable storage medium stores a program or instructions. When the program or the instructions are run on a computer, the computer performs the method shown in FIG. 4.

In an example embodiment, a chip is provided, including a processor, configured to invoke, from a memory, instructions stored in the memory and run the instructions, so that a computer in which the chip is installed performs the method shown in FIG. 4.

In an example embodiment, another chip is provided, including an input interface, an output interface, a processor, and a memory. The input interface, the output interface, the processor, and the memory are connected through an internal connection path. The processor is configured to execute code in the memory. When the code is executed, a computer in which the chip is installed performs the method shown in FIG. 4.

All or a part of the foregoing embodiments may be implemented by using software, hardware, firmware, or any combination thereof. When software is used to implement embodiments, all or a part of embodiments may be implemented in a form of a computer program product. The computer program product includes one or more computer instructions. When the computer program instructions are loaded and executed on a computer, the procedure or functions according to this application are completely or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (Solid State Disk)), or the like.

In this application, terms such as "first" and "second" are used to distinguish between same items or similar items that have basically same roles and functions. It should be understood that there is no logical or timing dependency between "first", "second", and "n^{th}", and neither a quantity nor an execution sequence is limited. It should also be understood that although the following descriptions use terms such as "first" and "second" to describe various elements, these elements should not be limited by the terms. These terms are simply used to distinguish one element from another.

It should be further understood that sequence numbers of the processes do not mean execution sequences in embodiments of this application. The execution sequences of the processes should be determined based on functions and internal logic of the processes, and should not constitute any limitation on implementation processes of embodiments of this application.

The term "at least one" in this application means one or more, and the term "a plurality of" in this application means two or more. For example, a plurality of second devices means two or more second devices. The terms "system" and "network" are often used interchangeably herein.

It should be understood that the terms used in the descriptions of the various examples in this specification are merely intended to describe specific examples but are not intended to constitute a limitation. For example, "a ("a" and "an")" and "the" of singular forms used in the descriptions of the various examples and the appended claims are intended to include plural forms, unless otherwise specified in the context clearly.

It should further be understood that the term "and/or" used in this specification indicates and includes any or all possible combinations of one or more of the associated listed items. The term "and/or" describes an association relationship for describing associated objects and represents that three relationships may exist. For example, A and/or B may represent the following three cases: Only A exists, both A and B exist, and only B exists. In addition, the character "/" in this application usually indicates an "or" relationship between the associated objects.

It should be further understood that the terms "if" and "if" may be interpreted to mean "when" ("when" or "upon") or "in response to determining" or "in response to detecting". Similarly, according to the context, the phrase "if it is determined that" or "if (a stated condition or event) is detected" may be interpreted as a meaning of "when it is determined that" or "in response to determining" or "when (a stated condition or event) is detected" or "in response to detecting (a stated condition or event)".

The foregoing descriptions are merely embodiments of this application, but are not intended to limit this application. Any modification, equivalent replacement, improvement, or the like made without departing from the principle of this application should fall within the protection scope of this application.

## Claims

1. A data update method, wherein the method is applied to a first device, and the method comprises:
obtaining first data and second data, wherein the first data comprises data obtained by compressing third data in at least a first compression manner and a second compression manner successively, the second data comprises data obtained by compressing fourth data in at least the first compression manner and the second compression manner successively, and the fourth data is obtained by updating the third data;
separately decompressing the first data and the second data in a first decompression manner corresponding to the second compression manner to obtain a first decompression result and a second decompression result, wherein the first decompression result comprises first intermediate data obtained based on the first data, and the second decompression result comprises second intermediate data obtained based on the second data;
determining first differential data between the second intermediate data and the first intermediate data; and
sending the first differential data, wherein the first differential data is used to update the first data in a second device.

2. The method according to claim 1, wherein the first decompression result further comprises first reference data corresponding to the first data, the first reference data is data referenced in a process of compressing the first intermediate data in the second compression manner to obtain the first data, the second decompression result further comprises second reference data corresponding to the second data, and the second reference data is data referenced in a process of compressing the second intermediate data in the second compression manner to obtain the second data; and
after determining the first differential data between the second intermediate data and the first intermediate data, the method further comprises:
determining, based on the first differential data, the first reference data, and the second reference data, reference data corresponding to the first differential data; and
sending the reference data, wherein the reference data is used to update the first data in the second device.

3. The method according to claim 1 or 2, wherein the method further comprises:
obtaining a first data packet comprising at least one piece of first compressed data and a second data packet comprising at least one piece of second compressed data, wherein the first data is first compressed data that is in the first data packet and that is different from the at least one piece of second compressed data, and the second data is second compressed data that is in the second data packet and that is different from the at least one piece of first compressed data.

4. The method according to any one of claims 1 to 3, wherein after sending the first differential data, the method further comprises:
obtaining fifth data and sixth data, wherein the fifth data and the first data are of different types, and the sixth data and the second data are of different types;
determining second differential data between the fifth data and the sixth data; and
sending the second differential data, wherein the second differential data is used to update the fifth data in the second device.

5. A data update method, wherein the method is applied to a second device, and the method comprises:
receiving first differential data corresponding to first data;
obtaining the first data in the second device, wherein the first data in the second device comprises data obtained by compressing third data in at least a first compression manner and a second compression manner successively;
decompressing the first data in the second device in a first decompression manner corresponding to the second compression manner to obtain a first decompression result, wherein the first decompression result comprises first intermediate data obtained based on the first data in the second device; and
updating the first data in the second device based on the first intermediate data and the first differential data.

6. The method according to claim 5, wherein updating the first data in the second device based on the first intermediate data and the first differential data comprises:
updating the first intermediate data based on the first differential data to obtain third intermediate data;
compressing the third intermediate data in the second compression manner to obtain seventh data; and
updating the first data in the second device to the seventh data.

7. The method according to claim 5, wherein updating the first data in the second device based on the first intermediate data and the first differential data comprises:
updating the first intermediate data based on the first differential data to obtain third intermediate data;
compressing the third intermediate data in the second compression manner based on reference data corresponding to the first differential data to obtain seventh data; and
updating the first data in the second device to the seventh data.

8. The method according to claim 6 or 7, wherein after updating the first data in the second device to the seventh data, the method further comprises:
updating fifth data in the second device based on second differential data corresponding to the fifth data to obtain eighth data, wherein the fifth data in the second device and the first data in the second device are of different types; and
updating the fifth data in the second device to the eighth data.

9. A data update apparatus, wherein the apparatus is used in a first device, and the apparatus comprises:
an obtaining module, configured to obtain first data and second data, wherein the first data comprises data obtained by compressing third data in at least a first compression manner and a second compression manner successively, the second data comprises data obtained by compressing fourth data in at least the first compression manner and the second compression manner successively, and the fourth data is obtained by updating the third data;
a decompression module, configured to separately decompress the first data and the second data in a first decompression manner corresponding to the second compression manner to obtain a first decompression result and a second decompression result, wherein the first decompression result comprises first intermediate data obtained based on the first data, and the second decompression result comprises second intermediate data obtained based on the second data;
a determining module, configured to determine first differential data between the second intermediate data and the first intermediate data; and
a sending module, configured to send the first differential data, wherein the first differential data is used to update the first data in a second device.

10. A data update apparatus, wherein the apparatus is used in a second device, and the apparatus comprises:
a receiving module, configured to receive first differential data corresponding to first data;
an obtaining module, configured to obtain the first data in the second device, wherein the first data in the second device comprises data obtained by compressing third data in at least a first compression manner and a second compression manner successively;
a decompression module, configured to decompress the first data in the second device in a first decompression manner corresponding to the second compression manner to obtain a first decompression result, wherein the first decompression result comprises first intermediate data obtained based on the first data in the second device; and
an updating module, configured to update the first data in the second device based on the first intermediate data and the first differential data.

11. A computer-readable storage medium, wherein the computer-readable storage medium stores at least one instruction, wherein the instruction is loaded and executed by a processor to implement the data update method according to any one of claims 1 to 8.

12. A computer program product, wherein the computer program product comprises a computer program or instructions, and the computer program or the instructions are executed by a processor, to enable a computer to implement the data update method according to any one of claims 1 to 8.
